# EUROPEAN PATENT SPECIFICATION

(11) **EP 4 079 658 B1**
(45) Date of publication and mention of the grant of the patent: **05.03.2025**
(21) Application number: 20903392.7
(22) Date of filing: 17.12.2020
(51) Int. Cl.: B65D 83/04, A61J 7/00, A61J 7/04, G01J 1/02

(54) **PASSING DEVICE, CONTENT RECEIVING MECHANISM EQUIPPED WITH PASSING DEVICE, MEDICATION MANAGEMENT DEVICE, AND METHOD FOR DETERMINING WHETHER OR NOT TO DISCHARGE CONTENT**
PASSIERVORRICHTUNG, INHALTSEMPFANGSMECHANISMUS MIT PASSIERVORRICHTUNG, MEDIKAMENTENVERWALTUNGSVORRICHTUNG UND VERFAHREN ZUM BESTIMMEN, OB DER INHALT AUSGEGEBEN WERDEN SOLL ODER NICHT
DISPOSITIF DE PASSAGE, MÉCANISME DE RÉCEPTION DE CONTENU ÉQUIPÉ DU DISPOSITIF DE PASSAGE, DISPOSITIF DE GESTION DE MÉDICAMENTS ET PROCÉDÉ PERMETTANT DE DÉTERMINER SI LE CONTENU DOIT ÊTRE DÉCHARGÉ OU NON

(30) Priority: 17.12.2019 KR 20190169241
(43) Date of publication of application: 26.10.2022
(73) Proprietor: Coledy Inc., Seoul 08807 (KR)
(72) Inventor: Park, Kyung Do, Seoul 05572 (KR)
(74) Representative: Schön, Christoph
(86) International application number: PCT/KR2020/018510
(87) International publication number: WO 2021/125817

(56) References cited:
- EP-A1- 3 412 600
- WO-A1-2018/016890
- WO-A1-2018/105677
- KR-A- 20140 018 601
- KR-A- 20180 010 157
- KR-B1- 102 032 794
- KR-B1- 102 157 445

## Description

### [Technical Field]

The present invention relates to a content passing device, and more particularly, to a passing device and a receiving mechanism that enable a fixed amount of content to be discharged from the receiving mechanism and detect whether the content is discharged, a method of determining whether content is discharged, and a medication management device that manages a user to take a fixed amount of medications.

### [Background Art]

Generally, health supplements, such as vitamins and the like, medicines, and foods such as chocolate, candy, and the like, are sold as solid content in the form of capsules or tablets (pill) or as powdery content in the form of being stored in containers.

Tools or small parts, such as bolts, nuts, and the like, are also manufactured as solid content (hereinafter referred to as "content") and used or managed in a state of being accommodated in containers.

General content accommodating containers have a structure including a container body in which a large amount of content is accommodated and a cover that is coupled to an inlet of the container body to be opened or closed. Therefore, in order to ingest or use the content, the cover is opened from the container body and then the accommodated content is withdrawn. In such a conventional accommodating container, in order to acquire the content, when a user takes out the content by tilting the container body or putting his or her hand into the container body, the content pours out all at once or as much comes out as is being grasped by the hand. Therefore, it is difficult to simply take out the content one by one or by a required demand amount.

It is important to take a fixed amount of medications or health supplements in order to maximize their efficacy and prevent overdose or poisoning. In addition, it is necessary to manage inventory of tools or parts, such as screws, at work sites through discharge of a fixed amount thereof and automatic detection of discharge.

Accordingly, attempts have been made to develop a device for discharging a fixed amount of content from a receiving mechanism. However, it was not possible to accurately detect an amount of content discharged from the receiving mechanism, and as a result, it was difficult to provide accurate medication guidance or inventory management.

KR 2018 0010157 A discloses a passing device comprising a transmission unit installed in a passing operation unit to transmit radio waves to a direction of a passing movement unit guiding movement of contents, a receiving unit installed in the passing operation unit to receive radio waves reflected by the contents, and a sensing control unit detecting contents discharged through the passing operation unit through the radio waves received by the receiving unit after transmitting the radio waves in the transmission unit.

### [Disclosure]

### [Technical Problem]

The present invention has been devised to improve the above problems and is directed to providing a content passing device that accurately detects content discharged from a receiving mechanism for accommodating the content therein.

The present invention is also directed to providing a content passing device and a receiving mechanism that enable a user to take a fixed amount of medications through the above object, and a medication management device.

The present invention is also directed to providing a passing device that automatically detects discharge of content by accurately distinguishing a jammed state and discharge of the content, and a receiving mechanism.

The present invention is also directed to providing a method of determining with high accuracy whether content is discharged from a receiving mechanism equipped with the passing device.

### [Technical Solution]

A passing device according to the present invention is defined in appended claim 1.

A medication management device according to the present invention is defined in appended claim 9.

A method according to the present invention is defined in appended claim 10.

Preferred embodiments are defined in the dependent claims.

### [Advantageous Effects]

According to an aspect of the present invention, it is possible to provide a passing device with high accuracy for detecting discharge of content, and it is possible to manage a user to take a fixed amount of medications using the passing device.

According to another aspect of the present invention, by providing a passing device that simply and accurately determines whether a fixed amount of content is discharged, it is possible to provide an accurate and economical content passing device and a receiving mechanism.

### [Description of Drawings]

FIG. 1 is a perspective view of a content receiving mechanism equipped with a passing device according to an embodiment of the present invention.
FIG. 2 is an exploded perspective view of a content receiving mechanism equipped with a passing device according to a first embodiment of the present invention.
FIG. 3 is a side cross-sectional view of the content receiving mechanism equipped with the passing device according to the first embodiment of the present invention.
FIG. 4 is a main part view illustrating an inclination state of a passing movement unit of the passing device according to the first embodiment of the present invention.
FIG. 5 shows side cross-sectional views illustrating changes in position and posture of content and the passing device in a process of discharging the content by tilting the content receiving mechanism equipped with the passing device according to the first embodiment of the present invention.
FIG. 6 is a cross-sectional view illustrating an example (when a single light emitting unit and a single light receiving unit are provided) of an installation structure of a detection unit in the passing device not falling under the scope of the present invention.
FIG. 7 is a cross-sectional view illustrating another example (when two light emitting units and two light receiving units are provided) of the installation structure of the detection unit in the passing device according to the first embodiment of the present invention.
FIG. 8 is a block diagram of a detection unit that detects a movement of content in a passing device of the present invention.
FIG. 9 shows schematic views illustrating an amount of light measured by a detection unit that detects a movement of content in a passing device of the present invention.
FIG. 10 shows an amount of light over time in the case in which a relatively large and long tablet passes through a passage portion and then is discharged to the outside in the first embodiment of the present invention including a passing device for a relatively large and long tablet.
FIG. 11 shows an amount of light over time in the case in which a relatively large and long tablet fails to be discharged in the first embodiment of the present invention including the passing device for a relatively large and long tablet.
FIG. 12 is a cross-sectional view of a content receiving mechanism equipped with a passing device according to a second embodiment of the present invention for passage of a relatively small tablet.
FIG. 13 shows cross-sectional views illustrating changes in position and posture of content and the passing device in a process of discharging the content by tilting the content receiving mechanism equipped with the passing device according to the second embodiment of the present invention.
FIG. 14 is a graph showing, when the receiving mechanism equipped with the passing device according to the second embodiment of the present invention is tilted, an amount of light over time, which is detected by each of two light receiving elements when a relatively small tablet is discharged.
FIG. 15 is a graph showing, when the receiving mechanism equipped with the passing device according to the second embodiment of the present invention is tilted, an amount of light over time, which is detected by each of two light receiving elements when a relatively small tablet fails to be discharged.
FIG. 16 is a graph showing, when the receiving mechanism equipped with the passing device according to the second embodiment of the present invention is tilted, an amount of light over time, which is detected by each of two light receiving elements when a relatively small tablet is successfully discharged.
FIG. 17 is a graph showing, when the receiving mechanism equipped with the passing device according to the second embodiment of the present invention is tilted, an amount of light over time, which is detected by each of two light receiving elements when a relatively small tablet fails to be discharged.
FIG. 18 shows, when the receiving mechanism equipped with the passing device according to the second embodiment of the present invention is tilted, a change in amount of the light detected by each of two light receiving elements where a relatively small tablet is successfully discharged.
FIG. 19 is a graph showing, when the receiving mechanism equipped with the passing device according to the second embodiment of the present invention is tilted, an amount of light over time, which is detected by each of two light receiving elements when a relatively small tablet is successfully discharged.
FIG. 20 is a flowchart of a method of determining whether content is discharged according to an embodiment of the present invention.
FIG. 21 is a block diagram of a medication management device including a receiving mechanism (1) equipped with a passing device of the present invention, a medication guide terminal (600), and a medication management server (700).
FIG. 22 is a block diagram of a medication guide terminal of a medication management device according to an embodiment of the present invention.

### [Modes of the Invention]

Hereinafter, a passing device, a receiving mechanism, a medication management device, and a method of determining whether content is discharged according to an embodiment of the present invention will be described with reference to the accompanying drawings. In this process, thicknesses of lines, sizes of components, and the like illustrated in the drawings may be exaggerated for clarity and convenience of description. Further, some terms which will be described below are defined in consideration of functions in the present invention and meanings may vary depending on, for example, a user or operator's intentions or customs. Therefore, the meanings of these terms should be interpreted based on the scope throughout this specification.

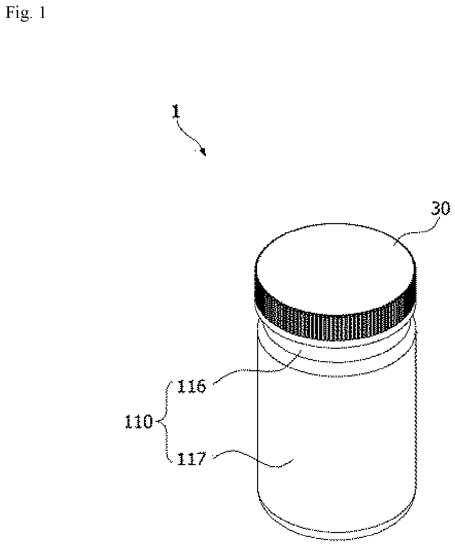

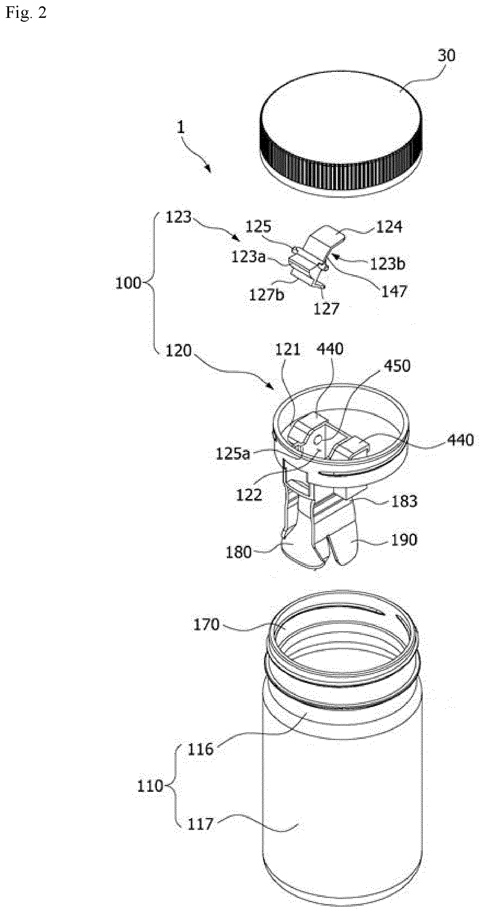

FIG. 1 is a perspective view of a content receiving mechanism equipped with a passing device according to a first or second embodiment of the present invention, and FIG. 2 is an exploded perspective view of the content receiving mechanism equipped with the passing device according to the first embodiment of the present invention.

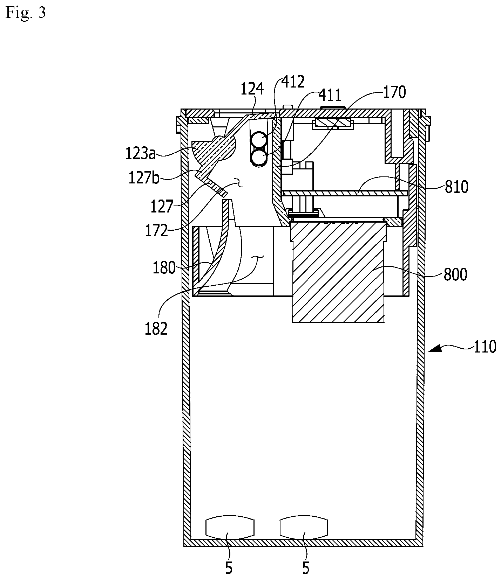

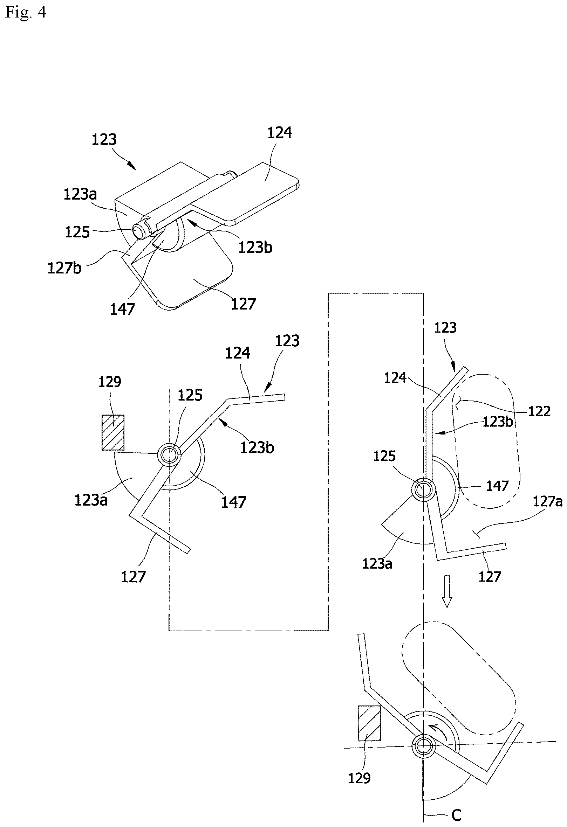

FIG. 3 is a side cross-sectional view of the content receiving mechanism equipped with the passing device according to the first embodiment of the present invention, and FIG. 4 is a main part view illustrating an inclination state of a passing movement unit of the passing device according to the first embodiment of the present invention.

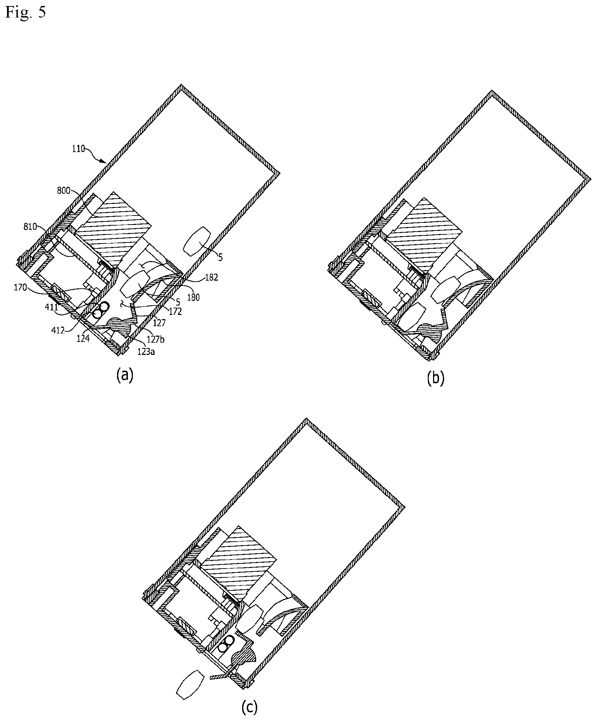

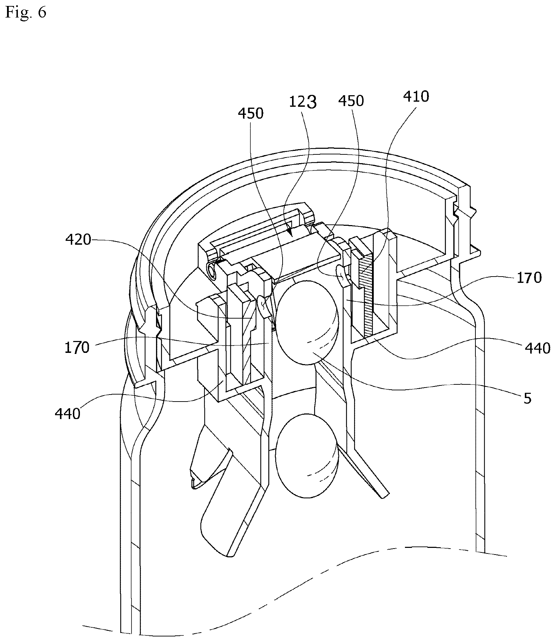

FIG. 5 shows side cross-sectional views illustrating changes in posture and position of content and the passing device according to an angle change when the content receiving mechanism equipped with the passing device according to the first embodiment of the present invention is tilted. FIG. 6 is a cross-sectional view illustrating an example of an installation structure of a detection unit which does not fall under the scope of the present invention, but illustrates a case in which a single light emitting unit and a single light receiving unit are provided.

As illustrated in FIGS 1 to 5, a content receiving mechanism 1 equipped with a passing device 100 according to the first embodiment of the present invention includes a housing 110, and the passing device 100 that is installed in the housing 110 to control the passage of content and detect whether the content is discharged.

The housing 110 is a container for accommodating or storing content 5, and includes a container body 117 which is a portion for receiving and storing the content 5 and a passing device entry part 116 in which the passing device 100 is mounted. An opening which is formed on an upper portion of the container body 117 and connected to an interior of the container body is included inside the passing device entry part 116. The passing device entry part 116 may be formed to extend from the upper portion of the container body 117, and a screw thread for coupling a container lid 30 may be formed on an outer circumferential surface of the passing device entry part 116.

Here, the content 5 is solid content, powder content, or the like, and is accommodated in an inner space of the container body 117 in which the passing device 100 is mounted.

The passing device 100 includes a passing operation unit 120 and a passing movement unit 123. The passing operation unit 120 includes a fixing member 121 fixedly coupled to the passing device entry part 116. The fixing member may serve to block the opening, wherein an opening 122 may be formed in one region of the fixing member 121 to allow the content to pass therethrough, and the content may pass through the opening 122 and be discharged from the container body to the outside.

As illustrated in FIG 2, an edge part may be formed on an outer circumferential surface of the fixing member 121, and the outer circumferential surface of the fixing member 121 may be mounted on an inner circumferential surface of the passing device entry part 116 formed on an upper portion of the housing 110 in a screw joining method. The passing device of the present invention is detachably coupled to the housing. However, the passing device 100 may be coupled to the housing in various ways such as by adhesion, fusion, and the like, and does not necessarily have to be detachable.

Meanwhile, a duct-shaped passage portion 172 that forms a movement path for discharging a fixed amount of the content 5 and a guide passage 182 that is connected to the passage portion 172 to guide the content are formed under the opening 122 of the fixing member 121. A passage, in which the opening 122, the passage portion 172, and the guide passage 182 are connected in a substantially straight line, is formed in the order of the opening 122, the passage portion 172, and the guide passage 182.

The content is moved from the container body 117 to the passage portion 172 through the guide passage 182 and discharged to the outside through the opening 122. An inner diameter of one side of the guide passage 182 is gradually increased downward so that the one side of the guide passage 182 is almost in close contact with an inner wall of the container body 117.

The passage portion 172 is formed by a sidewall 170 extending downward to be adjacent to the opening 122 of the fixing member 121 and by the passing movement unit 123.

The passing movement unit 123 includes an opening member 124 that blocks the opening, a rotation shaft 125 serving as a center of a rotational movement, and a blocking member 127 that is connected to the rotation shaft and rotated together with the opening member.

The rotation shaft 125 is installed in a holding part of the rotation shaft 125, which is formed in the fixing member, and the opening member 124 blocks at least a portion of the opening 122 to close the passage portion 172 with respect to the outside of the housing 110 in a normal state in which the receiving mechanism is erected, wherein, when the content pushes the opening member by gravity while the receiving mechanism is tilted at a certain angle or more, the opening member 124 is rotated about the rotation shaft 125 so that the opening 122 is opened, and thus the content passes through the opening 122 to be discharged to the outside. The configuration and operation of the passing movement unit 123 will be described below in detail with reference to FIGS. 4 and 5.

Meanwhile, as illustrated in FIG 3, the passing movement unit 123 together with the sidewall 170 forms the passage portion 172 in a normal state. The sidewall 170 forms three sidewalls of the passage portion 172 and the passing movement unit forms one side wall.

A guide portion 180 forming the guide passage 182 has a curved shape and the content is moved in the guide passage formed by the guide portion by frictional movement along the guide portion. Thereafter, the content is introduced into the passage portion 172 through the guide passage 182, and then is discharged to the outside through the opening at an upper end of the passage portion.

The guide passage 182 is formed by the guide portion 180 extending to be adjacent to the inner wall of the container body 117, guide members 190 formed at both sides of the guide portion, and a resistance upper plate member disposed to face the guide portion 180.

Internal cross-sectional areas of the passage portion 172 and the guide passage 182 and a size and shape of the passing movement unit are designed according to a size and shape of the content which is accommodated in the receiving mechanism and discharged in a fixed amount through the passing device 100. The above configuration is for discharging a fixed amount of content, and the opening member 124 and the blocking member 127 are connected to each other with the rotation shaft interposed therebetween and extend to have a predetermined angle, as illustrated in FIGS 3 and 4. Here, the "fixed amount" refers to the same number or amount, or refers to an amount or number that is moved differently within an error and allowable range. The "demand amount" refers to an amount (number) required by the user and is included in the category of the fixed amount.

When the user allows the content on a bottom of the container body 117 to be moved to the passage portion 172 by tilting the receiving mechanism that was standing upright, the content is brought into contact with a rear end of the opening member 124, as illustrated in FIG 5B, and when the user pushes the opening member 124, the blocking member 127 is rotated together with the opening member 124 to block the content that is intended to enter the passage portion 172 from the guide passage 182.

The sizes and angles of the opening member 124 and the blocking member 127 and the size of the movement path of the content are designed in order to control the movement and discharge of content in an exactly desired amount.

For example, in the case in which the fixed amount is one, when one piece of content 5 passes through a front of the passage portion 172, another piece of content 5 is adjacent to a rear of the content 5 that had passed through the front of the passage portion 172, and passes through a rear of the passage portion 172, and the content 5 that had passed through the rear of the passage portion 172 is moved and brought into contact with the blocking member 127.

**In** this case, the blocking member 127 may be formed to be bent, and a blocking member bent part 127b of the blocking member 127 may be bent linearly or may be formed as a curved surface. The blocking member bent part 127b formed to have an angle by bending the blocking member 127 may be configured to have a steep slope close to a right angle to prevent the content exceeding the demand amount from entering an inside of the passing operation unit 120. Of course, the blocking member bent part 127b may be bent at any one of various other angles.

Thereafter, the blocking member 127 blocks at least portion of the passage portion 172 to prevent the content 5 exceeding the fixed amount from being introduced into the passage portion 172.

In particular, as illustrated in FIG. 3, as an initial state in which the housing 110 is erected on the bottom, a state in which the opening member 124 is blocking the opening 122 may be maintained by an action of a force of weight balance of the passing movement unit 123 or by a stopper 129 of the passing movement unit 123.

That is, as illustrated in FIGS. 3 and 4, although a force to be rotated in a clockwise direction with respect to the rotation shaft 125 by the weight of the opening member 124 acts on the passing movement unit 123, the stopper 129 prevents the passing movement unit 140 from being rotated in the clockwise direction.

In the state in which the housing 110 is erected, which is a general storage state, the opening member 124 blocks the opening 122, and thus foreign substances such as air, dust, and the like are suppressed from entering an inner side of the housing 110 through the opening 122.

In addition, as illustrated in FIG. 3, in the initial state in which the housing 110 is erected (rotated at 0 degrees), a weighted action to the right side to be rotated in the clockwise direction by the action of the force to be moved to a weight balance state is suppressed by the stopper 129, and thus the passing movement unit 123 maintains the weight balance state (stationary state). In particular, when the passing movement unit 123 is in a right weighted state, the stopper 129 disposed at an upper left side end suppresses the passing movement unit 123 from being rotated in the clockwise direction.

Of course, a position and shape of the stopper 129 may be variously designed to have the above function. For example, the stopper 129 may be formed on one side of the fixing member, which is adjacent to the opening 122.

In FIG. 3, in the initial state, which is a state in which the container is erected, the detection unit which will be described below may be disabled. Since power loss occurs when the detection unit continues to operate, a separate motion sensor is mounted to reduce an amount of power, and when the motion sensor is operated, the detection unit may be switched from a standby state to an operating state.

FIG. 4 shows a state of the passing movement unit 123 when the housing 110 is tilted to guide the passage of the content 5. In particular, the passing movement unit 123 is rotated (moved) in both directions with respect to the rotation shaft 125 as a reference C.

Further, FIG. 5 shows (a) a state in which the receiving mechanism in the initial state is tilted at a predetermined angle, for example, 135 degrees, in a counterclockwise direction, (b) a state of the passing movement unit 123 in which the content is brought into contact with the opening member 124 by further tilting the receiving mechanism and starts to apply a force to the opening member 124, and (c) a state in which the content is discharged and next content that is positioned at a rear (upstream side) of the discharged content is blocked by the blocking member 127.

The passing movement unit 123 is moved in response to the movement of the content by the action of gravity, and opens the passing operation unit 120 so that the content passes therethrough. When the passing operation unit 120 is tilted or moved, the passing movement unit 123 may be moved by at least one of the weight of the passing movement unit 123, the inertia of the passing movement unit 123, and the force of the content pressing the passing movement unit 123.

The rotational movement of the passing movement unit 123 for passing the content is performed by, while the rotation shaft 125 of the passing movement unit 123 positioned in a downward direction, which is a direction of gravity, gravity movement of the content or a kinetic force of the content being transferring to the passing movement unit 123 by the movement of the passing operation unit 120 being tilted, inverted, or shaken.

Further, the rotational movement of the passing movement unit 123 is performed by the kinetic force according to pressing of the weight of the content. The center of gravity of the passing movement unit 123 is positioned in a direction (upstream side in the movement path of the content) opposite to an external passing direction of the passing device 100, which is a rearward direction of the position of the rotation shaft 125 of the passing movement unit 123. When the passing operation unit 120 coupled to the receiving mechanism is tilted by the inclination of the receiving mechanism **1,** the rotational movement of the passing movement unit 123 may be inhibited or delayed due to a difference in position between the center of gravity of the passing movement unit and the rotation shaft 125.

The passing movement unit 123 may include a motion control member 123a, and a balance unit 123b that suppress the passing movement unit 123 from being tilted together with the passing operation unit 120. When the passing operation unit 120 is tilted in a downstream direction of the movement path of the content, which is a direction in which the content 5 slides along the movement path, a weighted force in a direction opposite to the inclination direction of the passing operation unit 120 acts on the passing movement unit 123, and thus the opening member 124 is tilted by the weight of the opening member 124 to suppress the opening 122 from being opened. At the same time, the rotation of the blocking member 127 included in the passing movement unit 123 is prevented, and thus the passage of the content that is introduced into the passage portion 172 is maintained without change.

The balance unit 123b is configured to generate a force that rotates in a direction opposite to a direction of a slope of the passing operation unit 120, in which a weight balance state of the balance unit 123b is tilted to pass the content 5 therethrough, and thus the opening member 124 is not bent in the direction of the slope of the passing operation unit 120 by the weight balance of the balance unit 123b, and the force that rotates in the direction opposite to the direction of the slope of the passing operation unit 120 acts.

The direction of the force that is intended to rotate in order for the passing movement unit 123 or the balance unit 123b to maintain equilibrium or to achieve equilibrium is generated by the force to rotate the passing movement unit 123 or the balance unit 123b in the direction opposite to the direction of the slope of the content receiving mechanism or the receiving mechanism 1. **In** particular, the passing movement unit 123 may further include a motion control member 123a that does not face the passage portion 172 for balancing the center of gravity of the passing movement unit 123.

Meanwhile, when a length of one side end of a piece of content 5 that passes therethrough is different from a length of another side end, a minimum inner diameter L1 of the passage, which is a minimum length of an inner diameter of the inner space of the passage portion 172, is less than or equal to twice a maximum outer diameter L2 of the content in a short direction, which is a maximum length of an outer diameter in the short direction of the piece of content 5, and thus two or more pieces of content 5 cannot enter or pass through a passing passage 139 simultaneously, and only one piece of content 5 is allowed to enter or pass through the passing passage 139 at one time.

Further, when the length of the one end of the piece of content 5 that passes therethrough is different from a length of another side end, the passage portion 172 guides the content 5 to pass through the passage portion 172 in a longitudinal direction of the length of the end in a long direction.

The detection unit includes one or more light emitting units installed on one side of the passage portion 172, which is a moving passage that is formed in the passing operation unit and discharges the content, and one or more light receiving units installed on another side of the moving passage facing the one side on which the light emitting units are installed.

The light emitting units are formed on one side of the sidewall 170 forming the passage portion 172, and the light receiving units are formed on another side facing the one side of the sidewall.

FIG. 6 is a cross-sectional view illustrating an example (case in which a single light emitting unit and a single light receiving unit are provided) of an installation structure of the detection unit in the passing device which does not fall under the scope of the present invention. A light emitting unit 420 is installed on one side of the sidewall 170 coupled to extend to a lower portion of the fixing member. Specifically, the light emitting unit 420 may be installed on a support part 440 which is formed to protrude to the outside of one side of the sidewall. In this case, a passing through part 450 may be formed in the passing operation unit 120 so that light emitted from the light emitting unit 420 may be emitted to the passage portion 172.

A light receiving unit 410 is installed on a support part 440 of another side of the sidewall 170 to receive the light emitted from the light emitting unit 420. It is sufficient that the light emitting unit and the light receiving unit are disposed to face each other with the passage portion interposed therebetween, and the light emitting unit and the light receiving unit may be installed at positions other than that of the support part 440.

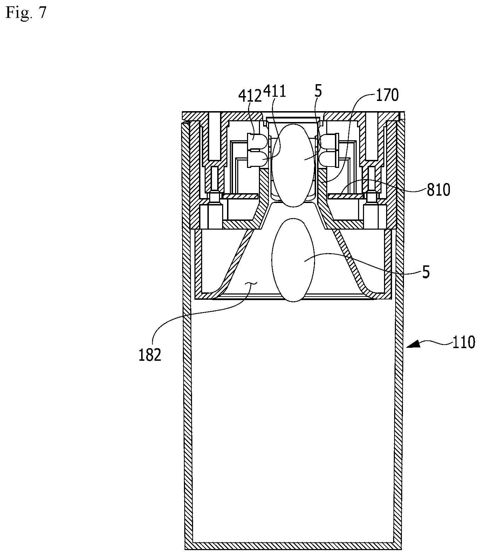

FIG. 7 is a cross-sectional view illustrating another example of the installation structure of the detection unit in the passing device according to the first embodiment of the present invention, and illustrates a structure in which a detection unit having two light emitting units and two light receiving units is provided.

Two photodiodes installed on one side of the passage portion are arranged in a line along the movement path of the content of the passage portion 172. Specifically, the light receiving units composed of two photodiodes are arranged on one side of the sidewall 170 forming the passage portion 172 in a line along the movement path of the content.

Referring to FIG. 7, two light receiving units 411 and 412 may be vertically arranged in a line in a through hole formed in one side of the sidewall 170 forming the passage portion 172, and a transmission wall through which light can be transmitted may be disposed between the through hole and the passage portion 172.

The light emitting units are disposed on another side of the sidewall 170 forming the passage portion 172 to face the light receiving units. The light emitting units emit light toward the content, and the light receiving units receive the light emitted from the light emitting units. Even in the light emitting units, like the light receiving units, two light emitting units may be vertically arranged in a line on the outside of the passage portion 172 and in the through hole formed in the sidewall 170, and the transmission wall through which light can be transmitted may be disposed between the through hole and the passage portion 172.

The two light receiving units 411 and 412 and the two light emitting units are physically and electrically connected and fixed to a printed circuit board (PCB) 810 couple to the fixing member.

The detection unit includes at least one light emitting unit that emits light, at least one light receiving unit that receives the light emitted from the light emitting unit, and a sensing control unit. The sensing control unit controls the light emitting unit and the light receiving unit, and processes an optical signal which is received by the light receiving unit after being emitted from the light emitting unit. The sensing control unit may be implemented with a microcontroller unit (MCU), a field programmable gate array (FPGA), or the like, and may be physically included in the PCB 810.

Meanwhile, the passing device may further include a communication module.

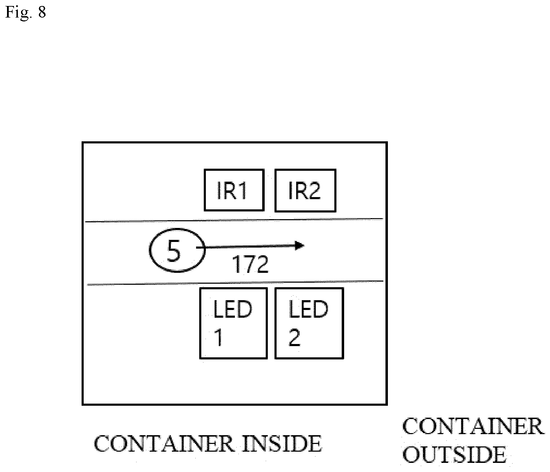

FIG. 8 is a block diagram of a detection unit that detects a movement of content according to an embodiment of the present invention. Referring to FIG. 8, as light emitting units, two light emitting diodes (LEDs), particularly, infrared LEDs, are arranged in a line along the passage portion 172. Light receiving units IR1 and IR2 are photodiodes capable of detecting infrared light, and are arranged in a line along the path of the passage portion at positions facing the two LEDs. The light receiving units are satisfied as long as they are light sensing elements capable of sensing light and are not limited to photodiodes.

The light receiving units are composed of first and second light receiving units, wherein a first light receiving unit 411 or IR1 is disposed on a relatively lower portion of the passage portion 172, that is, at an upstream side in the movement path of the content, and a second light receiving unit 412 or IR2 is disposed on a relatively upper portion of the passage portion 172, that is, at a downstream side in the movement path of the content.

The light emitting units are composed of one or more light emitting elements, and may be composed of two light emitting elements. Although both two light emitting elements may be turned on to irradiate the passage portion with light, only one of the two light emitting elements may be in an ON state. Alternatively, one light emitting element is disposed to face the two light receiving units and disposed at an intermediate position of the two light receiving units. The light emitted from the light emitting unit crosses the passage portion and is detected by the light receiving unit. When the content passes therethrough, the light emitted from the light emitting unit is blocked by the content, and thus it is detected that an amount of light is temporarily small.

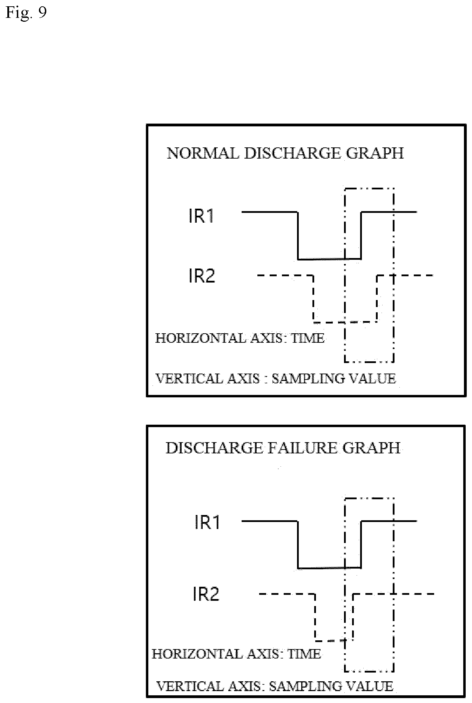

FIG. 9 shows schematic views illustrating change patterns of an amount of light measured by a detection unit having two light receiving units for detecting a movement of content of the present invention. An amount of light detected by each of two light receiving units IR1 and IR2 has an analog value, and an analog-to-digital converter (ADC) converts the analog value into a digital value to obtain a sampling value. A sensing control unit may detect whether a tablet passes therethrough using the sampling value. When a gap between the light emitting unit and the light receiving unit is blocked with the tablet, the amount of the received light is reduced, and thus the sampling value is also reduced at a moment the tablet passes.

In FIG. 9, a horizontal axis represents time, and a vertical axis represents the sampling value obtained by converting, by the ADC, the amount of the light detected by each of the first light receiving unit IR1 and the second light receiving unit IR2 into a digital value.

The success or failure of the discharge may be determined by comparing a waveform of the light detected by the first light receiving unit IR1 and a waveform of the light detected by the second light receiving unit IR2 over time in case of success or failure of discharge.

Through the above determination method, by solving the problem of about 5% failure in a conventional method of determining whether content is discharged based on a change in amount of light detected by a single light receiving unit, determination errors can be reduced close to almost zero.

Specifically, when the amount of the light detected by the first light receiving unit IR1 or 411 is changed from a state of falling within a first standard light amount range to a first reference light amount or less and then enters the first standard light amount range again, it is determined that the content has passed through the first light receiving unit region.

When the amount of the light detected by the second light receiving unit IR2 or 412 is changed from a state of falling within a second standard light amount range to a second reference light amount or less and then enters the second standard light amount range again, it is determined that the content has passed through the second light receiving unit region.

The first standard light amount range and the second standard light amount range are ranges of the amount of the light detected by the first light receiving unit and the second light receiving unit, respectively, in a state in which the content does not pass therethrough. When it is determined that the content passes through the first light receiving unit region before or at the same time as the second light receiving unit region, it is determined that the content has been discharged normally. Otherwise, that is, when it is determined that the content passes through the first light receiving unit region later than the second light receiving unit region, it is determined that the content has failed to be discharged.

Such a determination process may be performed by the sensing control unit included in the detection unit of the passing device or may be performed by a processor or the like included in the receiving mechanism, but the present invention is not limited thereto. The ADC may convert the analog value of the amount of the detected light, a wired or wireless communication module may transmit the converted value to an external server or terminal, and thus the external terminal or server may perform the determination process. Such an external terminal or server may be a medication management terminal or a medication management server.

In order to verify the detection of the amount of light by the two detection units illustrated in FIG. 9, the inventors of the present invention obtain the following specific experimental results by repeating the experiment several times.

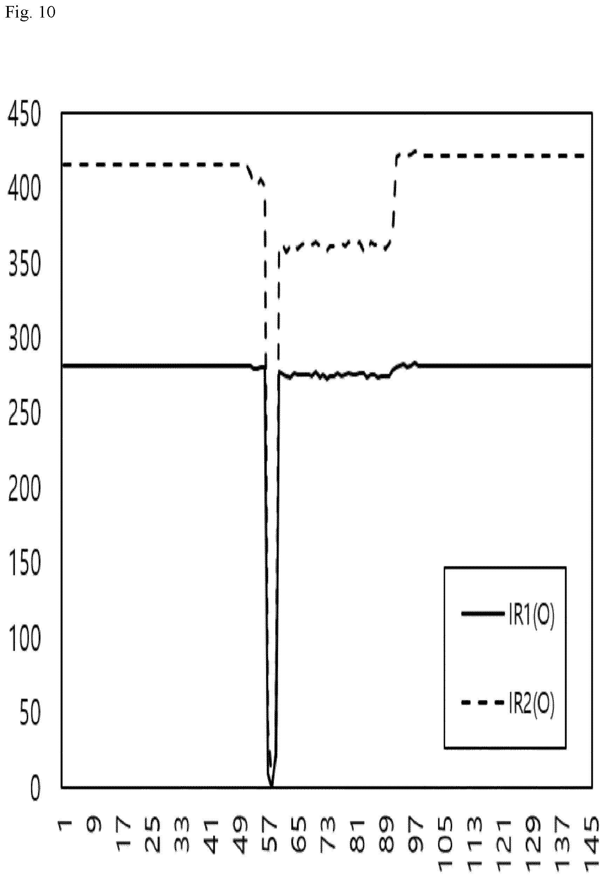

FIG. 10 is a graph showing a change in an amount of light in the case in which a relatively large and long tablet passes through a passage portion and then is discharged to the outside, when the receiving mechanism equipped with the passing device in which two light emitting elements are arranged is tilted according to the first embodiment of the present invention. In this case, only one light emitting element disposed on a side close to the opening 122 among the two light emitting elements is in an ON state.

In FIG. 10, an amount of light detected by a first light receiving unit is indicated by a solid line, and an amount of light detected by a second light receiving unit is indicated by a dotted line. Hereinafter, in the same manner in other drawings, an amount of light detected by a first light receiving unit is indicated by a solid line, and an amount of light detected by a second light receiving unit is indicated by a dotted line.

An amount of light detected by a first light receiving unit IR1 is maintained within a first standard light amount range (e.g., 250 to 300) substantially constant because content does not pass therethrough at the beginning. Thereafter, when the receiving mechanism is tilted, the content enters the passage portion 172, passes through the first light receiving unit region first, and rotates the opening member of the passing movement unit while pushing the opening member of the passing movement unit, and thus the content passes through the opening 122 and is discharged. Accordingly, the amount of the light is changed to the first reference light amount or less and then enters the first standard light amount range again.

Meanwhile, the amount of the light detected by the second light receiving unit IR2 disposed at the further downstream side of the passage portion is in a state of falling within the second standard light amount range (350 to 450), is changed to the second reference light amount (in this case, 10) or less, and then enters the second standard light amount range again.

In this case, as shown in the graph, a time, at which the amount of the light detected by the first light receiving unit is restored back to the first standard light amount range, is the same as or slightly earlier than a time, at which the amount of the light detected by the second light receiving unit is restored to a value within the second standard light amount range. A waveform of the light is observed when the content is successfully discharged.

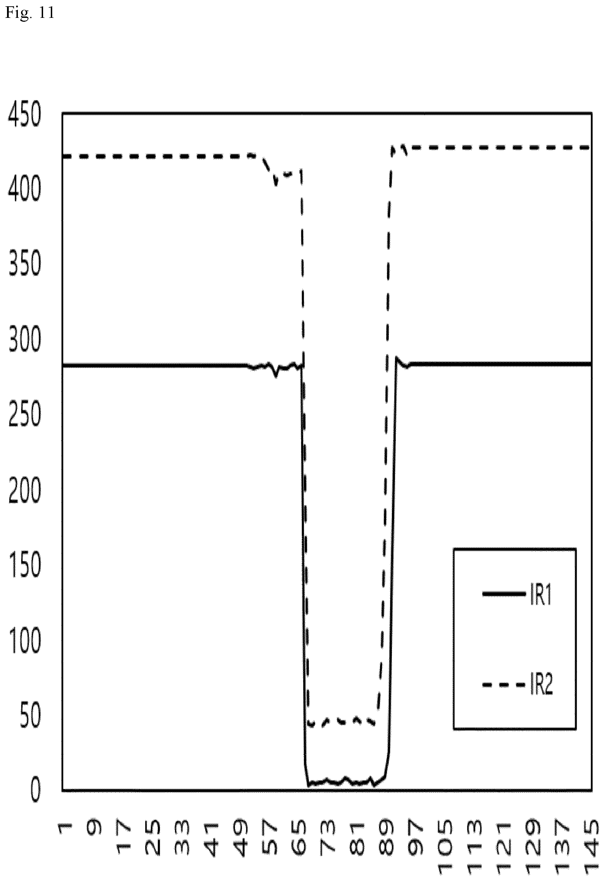

Meanwhile, referring to FIG. 11, when the receiving mechanism equipped with the passing device in which the two light emitting elements according to the first embodiment of the present invention are arranged is tilted, it is possible to obtain a change in amount of light when a relatively large and long tablet is caught in the passage and cannot be discharged and is accommodated in the container body again, that is, a change in amount of light in case of failure of discharge.

In this case, in the same manner as illustrated in FIG. 10, only one light emitting element disposed on a side close to the opening 122 among the two light emitting elements was tested in an ON state.

In FIG. 11, the amount of the light detected by the first light receiving unit IR1 is indicated by a solid line, and the amount of the light detected by the second light receiving unit IR2 is indicated by a dotted line.

The displayed amount of light detected by the first light receiving unit is maintained within the first standard light amount range (e.g., 250 to 300) substantially constant because content does not pass therethrough at the beginning. Thereafter, the content enters the passage portion 172 by tilting the receiving mechanism at a slope exceeding a predetermined slope and such a state continues for a considerable period of time. The amount of the light is maintained for a relatively long period of time for which the amount of the light becomes the first reference light amount or less, for example, 10 or less, and then enters the first standard light amount range again.

The amount of the light is within the first standard light amount range, is changed to the second reference light amount (in this case, 50) or less, and then enters the second standard light amount range again.

In this case, it can be seen from the graph that a time at which the amount of the light detected by the first light receiving unit is restored back to the first standard light amount range is later than a time for which the amount of the light detected by the second light receiving unit is restored to a value within the second standard light amount range. The waveform of the light is observed when the content cannot be successfully discharged and returns into the housing of the receiving mechanism.

When the content is long and relatively large, the passing movement unit including the blocking member does not block the passage portion, as illustrated in FIGS. 5A and 5B. Therefore, a change in amount of light caused thereby does not significantly affect a detection signal.

When a method of determining whether content is discharged according to another embodiment of the present invention is described with reference to FIG. 10, when the amount of the light detected by the light receiving unit is changed from a value within the standard light amount range to a set reference light amount or less and then enters the standard light amount range again, it can be determined that the content has been discharged.

However, as illustrated in FIG. 11, when the state in which the amount of the detected light is the set reference light amount or less is continued for a predetermined period of time or more, it can be determined that the content has caught in the passing operation unit and thus the content has not been discharged.

As can be seen by comparing FIGS. 10 and 11, a predetermined period of time T2 for which a state in which an amount of light detected in case of failure of discharge is less than or equal to a set reference light amount is maintained is longer than a period of time T1 for which a state in which an amount of light detected in case of success of discharge is less than or equal to the set reference light amount is maintained. The predetermined period of time T2 is two or more times longer than the period of time T1 for which the state in which the amount of the light is less than or equal to the reference light amount in case of success of discharge of the content is maintained.

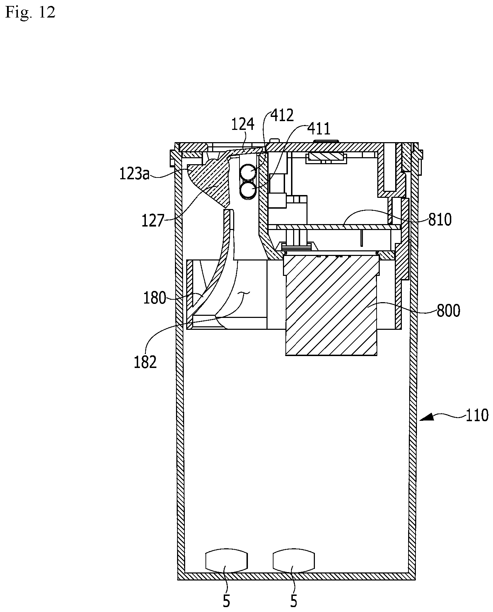

Hereinafter, the second embodiment of the present invention will be described using a structure of the passing device and a light amount change graph in detail with reference to FIGS. 12 to 20. The second embodiment is a configuration of the passing device when content is relatively small.

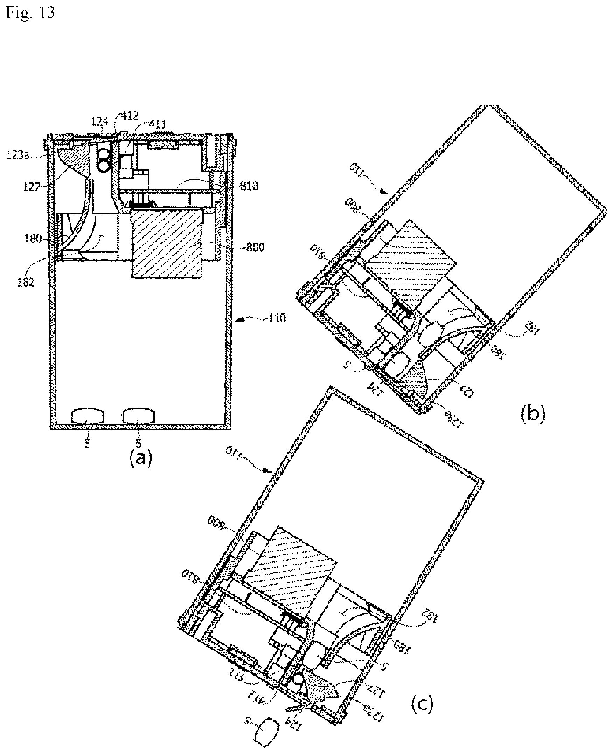

When a tablet is relatively small, a passing movement unit 123 including a blocking member 127 blocks a considerable portion of the passage portion, as illustrated in FIG. 13B and 13C. Therefore, a change in amount of light caused thereby does significantly affect a detection signal.

However, even in this case, it can be confirmed that a basic pattern according to whether the content is discharged according to the amount of the light detected by each of the first light receiving unit and the second light receiving unit over time is the same as that of FIG. 9.

FIG. 12 is a cross-sectional view of the content receiving mechanism equipped with the passing device according to the second embodiment of the present invention for passage of a relatively small tablet. As can be seen in FIG. 12, the passing movement unit according to the second embodiment of the present invention allows a relatively small content (tablet) in a fixed amount to pass therethrough, wherein the motion control member 123a and the blocking member 127 are integrally formed for appropriate weight distribution, and thus a portion disposed on a lower side of the passing movement unit, that is, at an upstream side of the passage portion 172, has a relatively thick shape. In order to guide a movement of a small tablet in a fixed amount through the passage portion and at the same time, to set the position of the center of gravity and the rotation shaft of the passing movement unit described above, the blocking member 127 is formed to be small and thick, and thus the motion control member 123a having an arc shape in which a rear surface of the blocking member is cut is formed.

Therefore, when the blocking member is rotated to the downstream side of the passage portion by the rotational movement of the passing movement unit when the content is discharged, a considerable portion of the passage is occupied thereby, at least partially blocks the light emitted from the light emitting unit to the light receiving unit, thereby significantly affecting the amount of the light detected by the light receiving unit.

As can be seen in FIG. 12, the configuration of the second embodiment except for the passing movement unit is substantially the same as that of the first embodiment, except that there is a difference in size and the like. The configuration of the detection unit of the second embodiment, particularly, the configuration of the first and second light receiving units, is the same as that of the first embodiment, except that the dimensions and intervals may be changed according to the size of the content. The same description as in the first embodiment will be omitted.

FIG. 13 shows cross-sectional views illustrating changes in position and posture of content and the passing device according to a change in angle when the content receiving mechanism equipped with the passing device according to the second embodiment of the present invention is tilted. As can be seen in FIG. 13C, the blocking member 127 and the motion control member 123a occupy a considerable portion of the passage portion 172 because their side cross-sections are integrally formed to be close to a triangle.

However, even in this case, whether content is discharged may be accurately determined based on the light amount change pattern of FIG. 9.

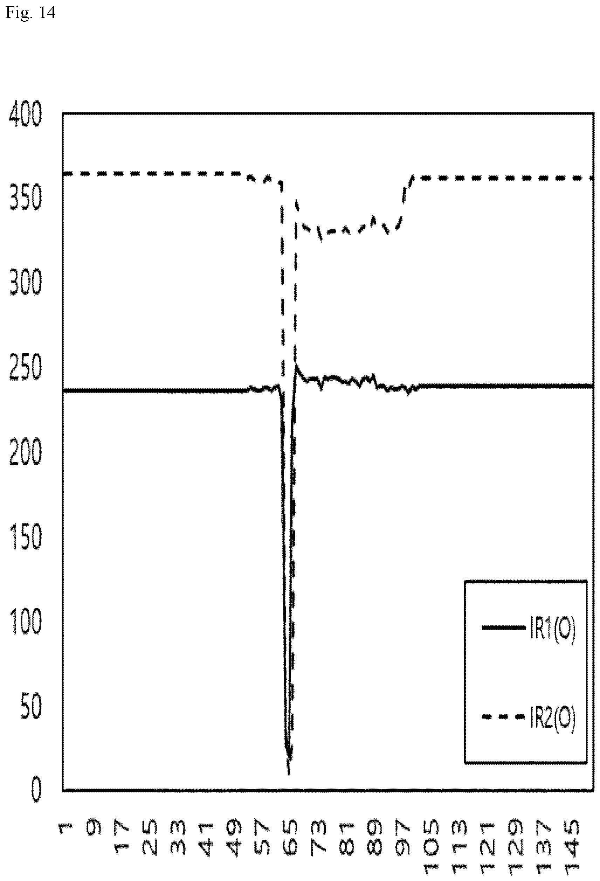

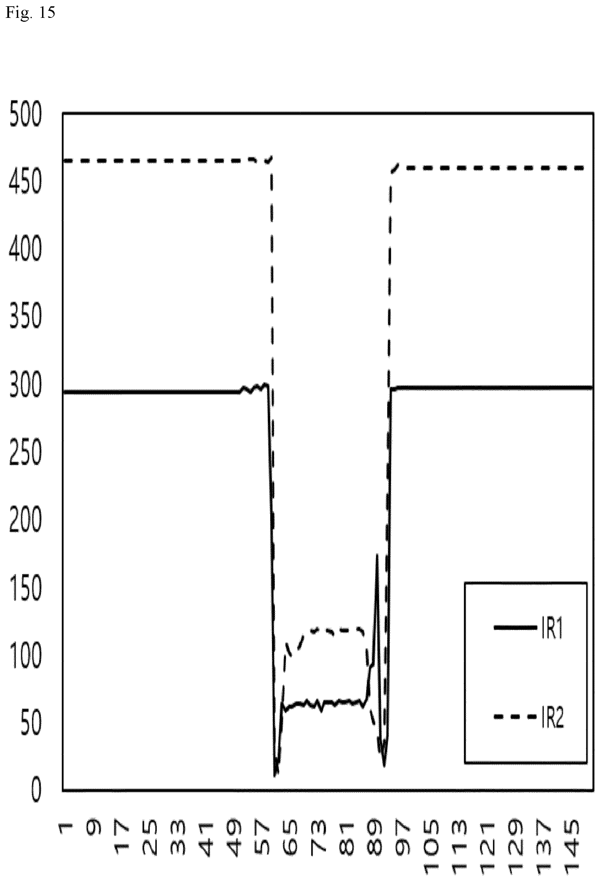

FIGS. 14 and 15 are graphs showing changes in amount of light over time in case of success and failure of discharge in a state in which only an LED positioned at a downstream side of the passage portion among the light emitting units composed of two LEDs is turned on.

FIG. 14 is a graph showing, when the receiving mechanism equipped with the passing device according to the second embodiment of the present invention is tilted, a change in amount of light over time when a tablet is discharged in the case that two light emitting elements are arranged in the passing device according to the second embodiment of the present invention.

An amount of the light detected by the first light receiving unit IR1 is maintained within a first standard light amount range (e.g., 200 to 250) substantially constant because the content does not pass through at the beginning. Thereafter, when the receiving mechanism is tilted, the content enters the passage portion 172, and the amount of the light is changed to a first reference light amount or less, for example, 30 or less, and then enters the first standard light amount range again.

Meanwhile, the amount of the light detected by the second light receiving unit disposed at the downstream side of the passage portion is within a second standard light amount range (300 and 400), is changed to a second reference light amount (in this case, 30) or less, and then enters the second standard light amount range again.

In this case, it can be seen from the graph that a time, at which the amount of the light detected by the first light receiving unit is restored back to the first standard light amount range, is earlier than a time, at which the amount of the light detected by the second light receiving unit is restored to a value within the second standard light amount range, and in this case, it is determined that the discharge has succeeded. That is, the amount of the light detected by the first light receiving unit IR1 returns to its original state first.

FIG. 15 is a graph showing, when the receiving mechanism equipped with the passing device according to the second embodiment of the present invention in which two light emitting elements are arranged is tilted, a change in amount of light over time when a relatively small tablet fails to be discharged.

As can be seen in FIG. 15, the amount of the light detected by the first light receiving unit IR1 is about 300 uniform at the beginning, is positioned at a low value for a considerable period of time, that is, a value in a range of approximately 1 to 160, reaches a value of 50 or less again, and then enters the first standard light amount range again.

In this way, a section in which the amount of the light detected by the first light receiving unit does not fall within the first standard light amount range continues for a relatively long period of time and the amount is fluctuated, and such a state is a state in which the tablet is caught in the passage.

Meanwhile, the amount of the light detected by the second light receiving unit disposed at the further downstream side of the passage portion is within the second standard light amount range (450 to 500), is changed to the second reference light amount (in this case, 50) or less, and then enters the second standard light amount range again.

In this case, it can be seen from the graph that a time at which the amount of the light detected by the first light receiving unit IR1 is restored back to the first standard light amount is later than a time at which the amount of the light detected by the second light receiving unit IR2 is restored to a value within the second standard light amount range. The waveform of the light is observed when the content cannot be successfully discharged and returns into the housing of the receiving mechanism.

Meanwhile, in both the first detection unit and the second detection unit, a predetermined period of time T2 for which a state in which the amount of light detected in case of failure of discharge as in FIG. 15 is less than or equal to the set reference light amount is maintained is longer than a period of time T1 for which a state in which the amount of light detected in case of success of discharge as in FIG. 14 is less than or equal to the set reference light amount is maintained. The predetermined period of time T2 is two or more times longer than the period of time T1 for which the state in which the amount of the light is less than or equal to the reference light amount in case of success of discharge is maintained.

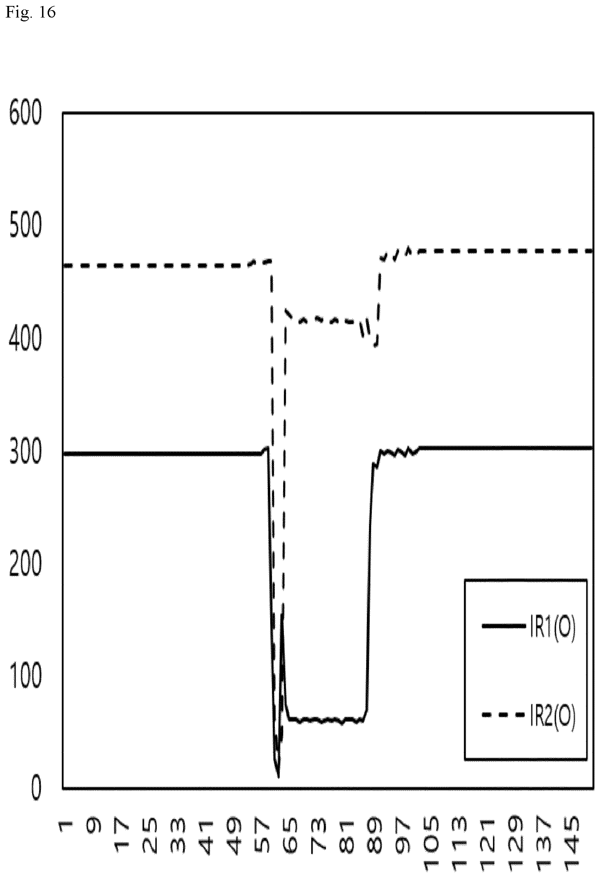

FIG. 16 is a graph showing, when the receiving mechanism equipped with the passing device according to the second embodiment of the present invention in which two light emitting elements are arranged is tilted, a change in amount of light over time when a relatively small tablet is successfully discharged.

The amount of light detected by the first light receiving unit IR1 is the first standard light amount range (about 300) uniform at the beginning, draws a downward peak (lowest value), is positioned in the third reference range, about 50 to 150 again, and then enters the first standard light amount range again.

In this way, the amount of the light detected by the first light receiving unit is maintained for a relatively long period of time in a third reference range, and such a state is a state in which a thick blocking member is positioned in the passage portion to block the light emitted from the light emitting unit.

Meanwhile, the amount of the light detected by the second light receiving unit disposed at the downstream side of the passage portion is in a state of falling within the second standard light amount range (400 to 500), is changed to the second reference light amount (in this case, 50) or less, and then enters the second standard light amount range again.

In this case, it can be seen from the graph that a time at which the amount of the light detected by the first light receiving unit is restored from the lowest value to the third reference range is earlier than a time at which the amount of the light detected by the second light receiving unit is restored to fall within the second standard light amount range. The waveform of the light is observed when the content is successfully discharged in the case in which the blocking member is thick.

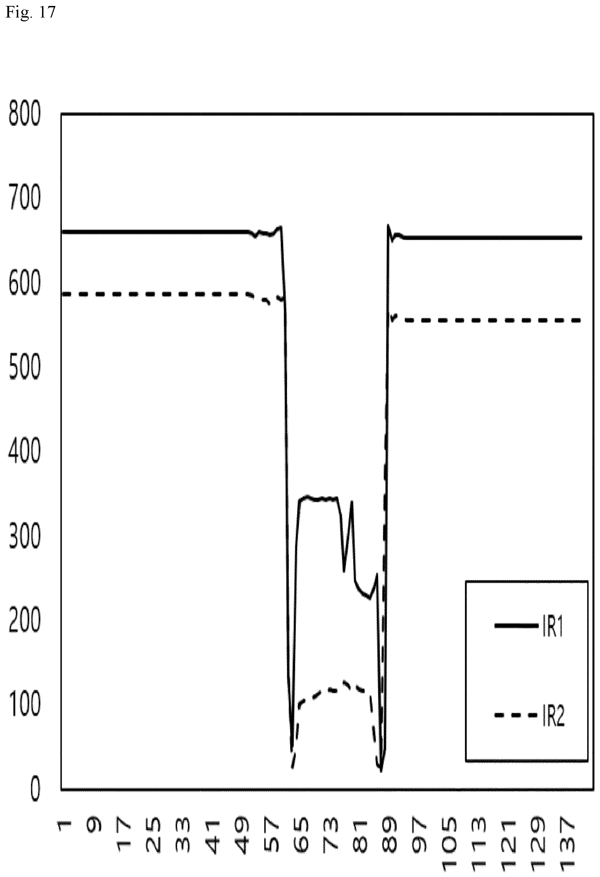

FIGS. 17 to 19 are graphs showing changes in amount of light detected by the first and second light receiving units when both two arranged LEDs are turned on.

FIG. 17 is a graph showing, when the receiving mechanism equipped with the passing device according to the second embodiment of the present invention in which two light emitting elements are arranged is tilted, a change in amount of light over time when a relatively small tablet fails to be discharged.

As can be seen in FIG. 17, the amount of the light detected by the first light receiving unit IR1 falls within a range of 600 to 720 (the first standard light amount range) at the beginning, is positioned at a first reference value (1 to 360), reaches the lowest value again, and then enters the first standard light amount range again.

In this way, a section in which the amount of the light detected by the first light receiving unit does not fall within the first standard light amount range continues for a relatively long period of time and the amount is fluctuated, and such a state is a state in which the tablet is caught in the passage.

Meanwhile, the amount of the light detected by the second light receiving unit disposed at the further downstream side of the passage portion is in a state of falling within the second standard light amount range (540 to 700), is changed to the second reference light amount (in this case, 180) or less, and then enters the second standard light amount range again.

In this case, it can be seen from the graph that a time at which the amount of the light detected by the first light receiving unit is restored back to the first standard light amount is later than a time at which the amount of the light detected by the second light receiving unit is restored to a value within the second standard light amount range. The waveform of the light is observed when the content cannot be successfully discharged and returns into the housing of the receiving mechanism.

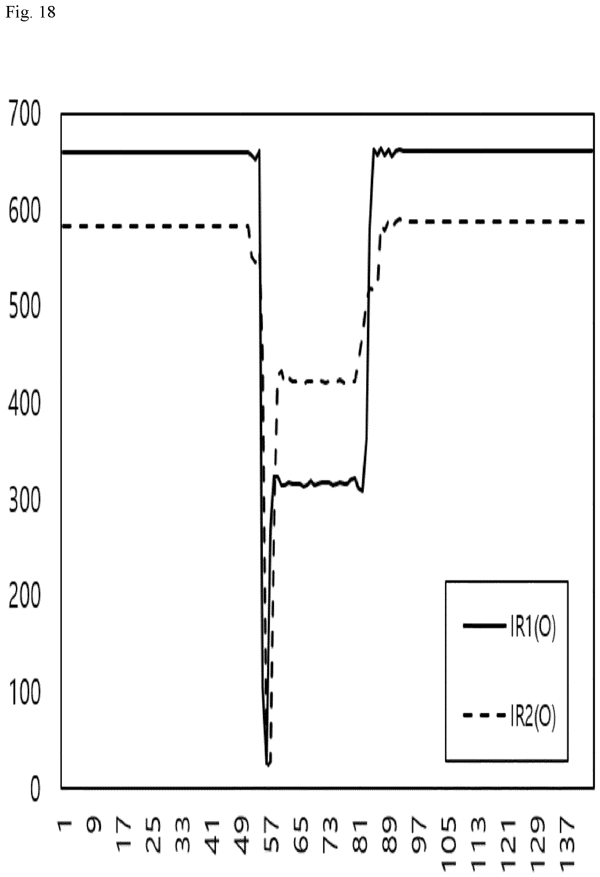

FIG. 18 is a graph showing, when the receiving mechanism equipped with the passing device according to the second embodiment of the present invention in which two light emitting elements are arranged is tilted, a change in amount of light over time when a relatively small tablet is successfully discharged.

In this way, the amount of the light detected by the first light receiving unit is rapidly decreased in a section of falling within the first standard light amount range (600 to 700), and is maintained in for a relatively long period of time in a section of falling within the third range (300 to 350) again and in a section of being the first reference value (100) or less, and then the amount of the light enters the first standard light amount range (600 to 700) again. The third range refers to a situation in which the passing movement unit including the blocking member partially blocks the light.

Meanwhile, the amount of the light detected by the second light receiving unit disposed at the further downstream side of the passage portion is in a state of falling within the second standard light amount range (550 to 600), is changed to the second reference light amount (in this case, 50) or less, is maintained in a fourth range for a considerable period of time, and then enters the second standard light amount range again.

In such a pattern, when the precedence of time is determined based on the case of falling within the third and fourth ranges, a time at which the first light receiving unit reaches the third range is earlier than a time at which the second light receiving unit reaches the fourth range, and in this case, it is determined that the content has been successfully discharged.

The third and fourth ranges refer to situations in which the passing movement unit including the blocking member partially blocks the light.

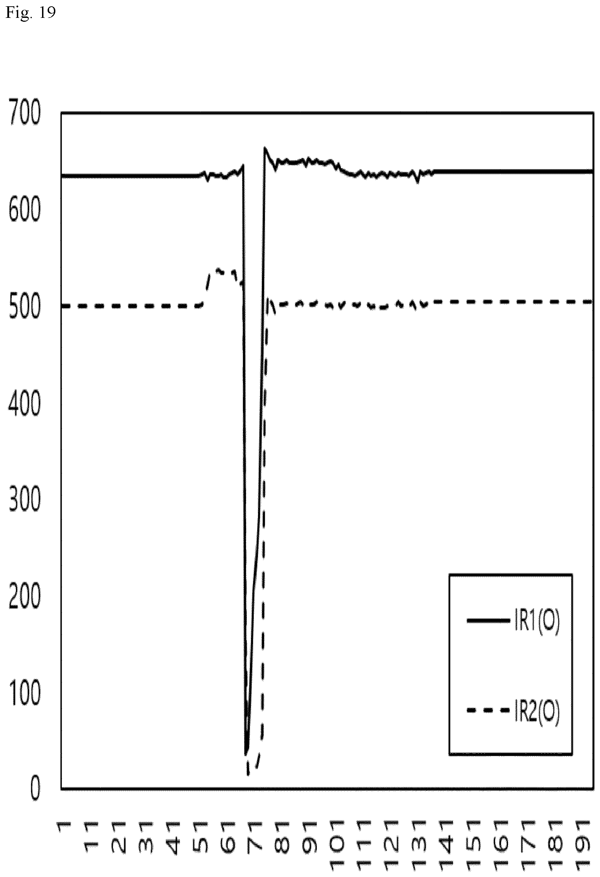

FIG. 19 is a graph showing, when the receiving mechanism equipped with the passing device according to the second embodiment of the present invention in which two light emitting elements are arranged is tilted, a change in amount of light over time when a relatively small tablet is successfully discharged. This case corresponds to the most common case, and a time at which the amount of the light detected by the first light receiving unit IR1 is in a state of falling within the first standard light amount range, reaches the lowest value of the first reference value or less, and then enters the first standard light amount range again is earlier than a time at which the amount of the light detected by the second light receiving unit IR2 reaches the lowest value and then enters the second standard light amount range again. That is, that is, the amount of light detected by the first light receiving unit IR1 returns to its original state first.

When the patterns of the amount of the light detected by the two arranged light receiving units IR1 and IR2 are compared, the amount of the light reaches the downward peak in the standard section and then the times at which the value of the standard section is detected again are compared to determine whether the content passes therethrough. However, it may be difficult to determine the downward peak (lowest value) depending on the form of the tablet, but in this case, a case, in which the amount of the light is recovered to the reference value from the value using the last downward peak as a reference, may be determined as a passing time. The reference value may be a value in which the amount of the light falls within the first or second standard light amount range, but the present invention is not limited thereto, and another value may be determined as the reference value.

Meanwhile, the user or the like may arbitrarily inject the content from the outside, and since this process changes the amount of content accommodated in the container, the amount of content may be measured. In this case, the discharge of the content and the signal patterns of the first and second light receiving units reversely appear. That is, a pattern that appears temporally later than the downward peak of the signal detected by the first light receiving unit inside the passage or the downward signal peak of the second light receiving unit is shown.

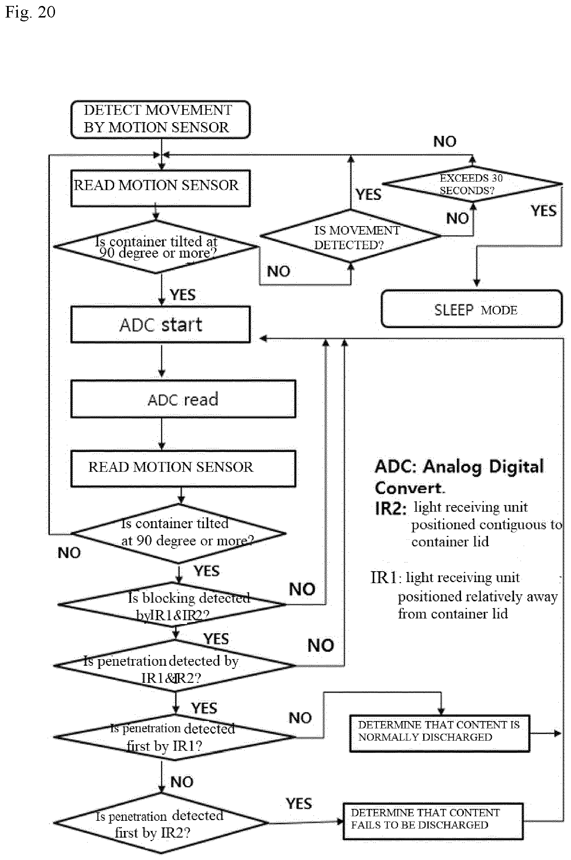

FIG. 20 is a flowchart of a process of determining whether content is discharged according to an embodiment of the present invention.

According to an embodiment of the present invention, a passing device or a receiving mechanism equipped with the passing device further include a motion sensor. Although the motion sensor may detect both a movement and a slope, it is sufficient that a motion sensor and an inclination sensor are each provided to detect the movement and the slope of the receiving mechanism or the passing device.

Referring to FIG. 20, the motion sensor detects the movement of the receiving mechanism including the passing device and a data value is read. Thereafter, when it is detected that the slope of the container is greater than or equal to about 90 degrees, the detection unit including the first and second light receiving units and the light emitting unit and the ADC are activated. This is to save power consumption by preventing unnecessary sensor operation. When the slope of the container is less than about 90 degrees, the detection unit and the like are deactivated, and the motion sensor returns back to the movement detection mode.

The above process will be described in more detail with reference to FIG. 20. When the motion sensor detects the movement, the data value is read, and in this case, when it is detected that the slope of the container is greater than or equal to 90 degrees, the ADC is activated. After the ADC is activated, the ADC processes the value detected by the motion sensor, and when it is detected that the slope is greater than or equal to 90 degrees, each of the first and second light receiving units is activated to detect a signal. In this case, when the slope of the container is not 90 degrees or more, the light receiving units are not activated, and the motion sensor returns back to a mode for detecting the slope of the motion sensor.

Meanwhile, when the slope of the container is 90 degrees or more and the light receiving units are activated, each of the first detection unit and the second detection unit detects the passage of the content, that is, the penetration. When the first light receiving unit detects the penetration before the second light receiving unit, it is determined that the content is normally discharged, and when the second light receiving unit detects the penetration before the first light receiving unit, it is determined that the content has failed to be discharged. This process is done in a processor after the ADC's signal sampling.

Meanwhile, the sensing control unit processes the amount of light signal detected by the light receiving unit according to the time, generates medication status information according to a result of whether the content passes therethrough, and transmits the generated medication status information to a medication guide terminal 600 through a communication module 500.

The sensing control unit generates the medication status information on the basis of a detection result of the content 5, and transmits the generated medication status information to the medication guide terminal 600.

The medication status information includes information about the content 5, information about whether the content 5 is detected, information about a detection time at which the content 5 is detected, and the like. The information about the content 5 may be preset in the sensing control unit or the like, and the information about whether the content 5 is detected and the information about a detection time at which the content 5 is detected may be detected in real time according to whether the content 5 is detected by the detection unit.

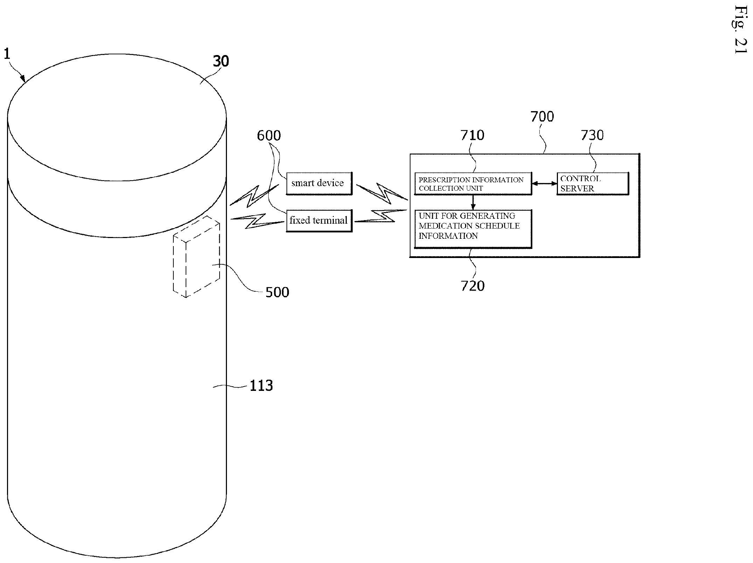

Referring to FIG. 21, the medication guide terminal 600 receives the medication status information from the sensor module 500, receives medication schedule information from a medication management server 700, generates medication management information using the medication schedule information and the medication status information, and then outputs the generated medication management information.

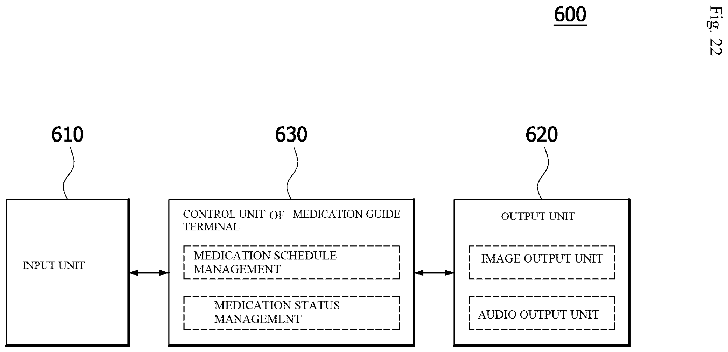

Referring to FIG. 22, the medication guide terminal 600 includes an external signal input unit 610, a control unit 630, and an output unit 620.

According to the present invention, it is possible to accurately detect an amount of content discharged from a receiving mechanism, and it is possible to allow a user to take a fixed amount of medications on the basis of the detected amount of the content.

## Claims

1. A passing device (100) configured to be coupled to a container body (117) that accommodates content (5), the passing device (100) comprising:
a passing operation unit (120) configured to guide a movement of content (5);
a passing movement unit (123) that is rotatably installed in the passing operation unit (120) and is moved so that the content (5) passes therethrough; and
a detection unit that is provided in the passing operation unit (120) and configured to detect the content (5) discharged by rotation of the passing movement unit (123),
wherein the detection unit includes a light receiving unit (410) and a light emitting unit (420), light emitted from the light emitting unit (420) passes through a path, through which the content (5) is moved to be discharged, and is detected by the light receiving unit (410), **characterized in that**
the light receiving unit (410) includes a first light receiving unit (411) disposed at an upstream side of the path through which the content (5) is moved to be discharged, and a second light receiving unit (412) disposed at a downstream side of the path;
and **in that** the light emitting unit (420) includes one or more light emitting units disposed to face the light receiving unit (410); and
wherein a first time point at which the amount of the light detected by the first light receiving unit (411) is changed from a state of falling within a first standard light amount range to a first reference light amount or less and then enters the first standard light amount range again is compared with a second time point at which the amount of the light detected by the second light receiving unit (412) is changed from a state of falling within a second standard light amount range to a second reference light amount or less and then enters the second standard light amount range again; and
when the first time point is the same as or earlier than the second time point, it is determined that the content (5) is discharged.

2. The passing device (100) of claim 1, wherein:
the passing operation unit (123) includes a duct-shaped passage portion (172) that forms a movement path for discharging a fixed amount of content (5), and a guide portion (180) that is connected to the passage portion (172) to guide the content (5), wherein the content (5) is moved along the guide portion (180), introduced into the passage portion (172), and then discharged to the outside through an opening (122) at an upper end of the passage portion (172);
the passing movement unit (123) includes an opening member (124) that opens or closes the opening (122), a rotation shaft (125) serving as a center of a rotational movement, and a blocking member (127) that is connected to the rotation shaft (125) and is rotated together with the opening member (124), wherein the passing movement unit (123) forms one side wall of the passage portion (172); and
the light receiving unit (410) and the light emitting unit (420) are disposed to face each other on respective side walls formed at left and right sides of the one side wall.

3. The passing device (100) of claim 1, wherein:
when the amount of the light detected by the first light receiving unit (411) is changed from a state of falling within a first standard light amount range to a first reference light amount or less and then enters the first standard light amount range again, it is determined that the content (5) passes through the first light receiving unit region;
when the amount of the light detected by the second light receiving unit (412) is changed from a state of falling within a second standard light amount range to a second reference light amount or less and then enters the second standard light amount range again, it is determined that the content (5) passes through the second light receiving unit region;
each of the first standard light amount range and the second standard light amount range is a range of the amount of the light detected by a corresponding one of the first light receiving unit (411) and the second light receiving unit (412) in a state in which the content (5) does not pass therethrough; and
when it is determined that the content (5) has passed through the first light receiving unit region before the second light receiving unit region, it is determined that the content (5) is normally discharged.

4. The passing device (100) of claim 3, wherein, when it is determined that the content (5) has passed through the second light receiving unit region before the first light receiving unit region, it is determined that the content (5) is not discharged.

5. The passing device (100) of claim 1, wherein:
a first time point at which the amount of the light detected by the first light receiving unit (411) reaches a downward peak and then reaches a first reference value is compared with a second time point at which the amount of the light detected by the second light receiving unit (412) reaches the downward peak and then reaches a second reference value; and
when the first time point is the same as or earlier than the second time point, it is determined that the content (5) is discharged.

6. The passing device (100) of claim 2, wherein:
The path through which the content (5) is moved to be discharged is formed by the duct-shaped passage portion (172);
the light receiving unit (410) disposed on one side of the passage portion (172) is composed of two photodiodes, wherein the two photodiodes are arranged in a line along the movement path of the content of the passage portion (172);
the light emitting unit (420) that is disposed on another side of the passage portion (172) to face the light receiving unit (410) emits light toward the passage portion (172), and the two photodiodes receive the light emitted from the light emitting unit (420); and
whether the content (5) is discharged is determined based on the amount of the light detected by the two photodiodes.

7. The passing device (100) of any one claim of claims 1 to 6, wherein a signal for the amount of the light, which is detected by the detection unit, is processed by an information processing device included in the passing device (100) or a separate external device, and whether the content (5) is discharged is determined.

8. The passing device (100) of claim 1, wherein the first light receiving unit (411) and the second light receiving unit (412) are arranged in a line along the movement path of the content of the passage portion (172).

9. A medication management device comprising:
the passing device (100) of claim 1;
a medication management server (700); and
a medication guide terminal (600),
wherein the medication guide terminal (600) includes an output unit (620), and
a medication guide terminal control unit (630) configured to receive medication status information from the detection unit, receive medication schedule information from the medication management server (700), generate medication guidance information about a user using the medication schedule information and the medication status information, and then output the generated medication guidance information to the output unit (620),
wherein the output unit (620) outputs the medication guidance information as an image or audio.

10. A method of determining, by an information processing device, whether content (5) is discharged based on an amount of light detected by the detection unit of the passing device (100) of claim 1,
wherein the detection unit includes a first light receiving unit (411) disposed at an upstream side of a path through which the content (5) is moved to be discharged, a second light receiving unit (412) disposed at a downstream side of the path, and one or more light emitting units (420) disposed to face the first and second light receiving units (411, 412),
the method comprising:
detecting, by both the first light receiving unit (411) and the second light receiving unit (412), the amount of the light that is out of a standard light amount range and is less than or equal to a reference light amount;
detecting, by each of the first light receiving unit (411) and the second light receiving unit (412), the amount of the light that is out of a first reference light amount and a second reference light amount respectively and varies to a value within a first standard light amount range and a second standard light amount range respectively;
comparing a first time point at which the amount of the light detected by the first light receiving unit is changed from a state of falling within a first standard light amount range to a first reference light amount or less and then enters the first standard light amount range again and a second time point at which the amount of the light detected by the second light receiving unit is changed from a state of falling within a second standard light amount range to a second reference light amount or less and then enters the second standard light amount range again; and
when the first time point is the same as or earlier than the second time point, determining that the content (5) is discharged.

11. The method of claim 10, further comprising:
detecting a slope of a container in which the passing device (100) is installed; and
when the detected slope of the container is greater than or equal to 90 degrees, activating the one or more light emitting units (420) and the first and second light receiving units (411, 412).

## Patentansprüche

1. Passiervorrichtung (100), die so konfiguriert ist, dass sie mit einem Behälterkörper (117) verbunden werden kann, der Inhalt (5) unterbringt, wobei die Passiervorrichtung Folgendes umfasst:
eine Passierbetriebseinheit (120), die zum Führen eines Bewegens von Inhalt (5) konfiguriert ist,
eine Passierbewegungseinheit (123), die drehbar in der Passierbetriebseinheit (120) installiert ist und so bewegt wird, dass der Inhalt (5) dort hindurchgeführt wird, und
eine Erkennungseinheit, die in der Passierbetriebseinheit (120) vorgesehen ist und konfiguriert ist, den durch die Drehung der Passierbewegungseinheit (123) ausgegebenen Inhalt (5) zu erfassen,
wobei die Erkennungseinheit eine Licht empfangende Einheit (410) und eine Licht emittierende Einheit (420) umfasst, wobei das von der Licht emittierenden Einheit (420) emittierte Licht durch einen Pfad hindurchläuft, durch den der Inhalt (5) für seine Ausgabe bewegt wird und von der Licht empfangenden Einheit (410) erkannt wird,
**dadurch gekennzeichnet, dass**
die Licht empfangende Einheit (410) eine erste Licht empfangende Einheit (411), die an einer stromaufwärtigen Seite des Pfads angeordnet ist, durch den der Inhalt (5) zum Ausgeben bewegt wird, und eine zweite Licht empfangende Einheit (412), die an einer stromabwärtigen Seite des Pfads angeordnet ist, umfasst,
und dadurch, dass die Licht emittierende Einheit (420) eine oder mehrere Licht emittierende Einheiten umfasst, die so angeordnet sind, dass sie der Licht empfangenden Einheit (410) zugewandt sind, und
wobei ein erster Zeitpunkt, an dem die Menge des Lichts, die von der ersten Licht empfangenden Einheit (411) erfasst wird, von einem Zustand, bei dem sie in einen ersten Standardlichtmengenbereich fällt, zu einer ersten Referenzlichtmenge oder weniger wechselt und anschließend wieder in den ersten Standardlichtmengenbereich eintritt, mit einem zweiten Zeitpunkt verglichen wird, an dem die Menge des Lichts, die von der zweiten Licht empfangenden Einheit (412) erfasst wird, von einem Zustand, bei dem sie in einen zweiten Standardlichtmengenbereich fällt, zu einer zweiten Referenzlichtmenge oder weniger wechselt und anschließend wieder in den zweiten Standardlichtmengenbereich eintritt, und wobei,
wenn der erste Zeitpunkt der gleiche oder ein früherer Zeitpunkt als der zweite Zeitpunkt ist, festgestellt wird, dass der Inhalt (5) ausgegeben ist.

2. Passiervorrichtung (100) gemäß Anspruch 1, wobei:
die Passierbetriebseinheit (123) einen kanalförmigen Passierabschnitt (172), der einen Bewegungspfad zum Ausgeben einer festgelegten Menge an Inhalt (5) bildet, und einen Führungsabschnitt (180), der mit dem Passierabschnitt (172) verbunden ist, um den Inhalt (5) zu führen, umfasst, wobei der Inhalt (5) entlang des Führungsabschnitts (180) bewegt wird, in den Passierabschnitt (172) eingeführt wird und anschließend durch eine Öffnung (122) an einem oberen Ende des Passierabschnitts (172) nach außen ausgegeben wird,
die Passierbewegungseinheit (123) ein Öffnungselement (124), das die Öffnung (122) öffnet oder schließt, eine Drehwelle (125), die als Zentrum einer Drehbewegung dient, und ein Blockierelement (127), das mit der Drehwelle (125) verbunden ist und zusammen mit dem Öffnungselement (124) gedreht wird, umfasst, wobei die Passierbewegungseinheit (123) eine Seitenwand des Passierabschnitts (172) bildet, und
die Licht empfangende Einheit (410) und die Licht emittierende Einheit (420) so angeordnet sind, dass sie auf den jeweiligen Seitenwänden, die an der linken und rechten Seite der einen Seitenwand gebildet sind, einander gegenüberliegen.

3. Passiervorrichtung (100) gemäß Anspruch 1, wobei:
wenn die Menge des Lichts, die von der ersten Licht empfangenden Einheit (411) erfasst wird, von einem Zustand, bei dem sie in einen ersten Standardlichtmengenbereich fällt, zu einer ersten Referenzlichtmenge oder weniger wechselt und anschließend wieder in den ersten Standardlichtmengenbereich eintritt, bestimmt wird, dass der Inhalt (5) durch die Region der ersten Licht empfangenden Einheit hindurchtritt,
wenn die Menge des Lichts, die von der zweiten Licht empfangenden Einheit (412) erfasst wird, von einem Zustand, bei dem sie in einen zweiten Standardlichtmengenbereich fällt, zu einer zweiten Referenzlichtmenge oder weniger wechselt und anschließend wieder in den zweiten Standardlichtmengenbereich eintritt, bestimmt wird, dass der Inhalt (5) durch die Region der zweiten Licht empfangenden Einheit hindurchtritt,
wobei jeder des ersten Standardlichtmengenbereichs und des zweiten Standardlichtmengenbereichs ein Bereich der Menge des Lichts ist, die von der entsprechenden der ersten Licht empfangenden Einheit (411) und der zweiten Licht empfangenden Einheit (412) in einem Zustand, bei dem der Inhalt (5) nicht durch diese hindurchtritt, erfasst wird, und,
wenn bestimmt wird, dass der Inhalt (5) durch die Region der ersten Licht empfangenden Einheit vor der Region der zweiten Licht empfangenden Einheit hindurchgetreten ist, bestimmt wird, dass der Inhalt (5) normal ausgegeben wurde.

4. Passiervorrichtung (100) gemäß Anspruch 3, wobei, wenn bestimmt wird, dass der Inhalt (5) durch die Region der zweiten Licht empfangenden Einheit vor der Region der ersten Licht empfangenden Einheit hindurchgetreten ist, bestimmt wird, dass der Inhalt (5) nicht ausgegeben wurde.

5. Passiervorrichtung (100) gemäß Anspruch 1, wobei:
ein erster Zeitpunkt, an dem die Menge des Lichts, die von der ersten Licht empfangenden Einheit (411) erfasst wird, einen Abwärtspeak erreicht und anschließend einen ersten Referenzwert erreicht, mit einem zweiten Zeitpunkt, an dem die Menge des Lichts, die von der zweiten Licht empfangenden Einheit (412) erfasst wird, den Abwärtspeak erreicht und anschließend einen zweiten Referenzwert erreicht, verglichen wird, und
wenn der erste Zeitpunkt der gleiche oder ein früherer Zeitpunkt als der zweite Zeitpunkt ist, bestimmt wird, dass der Inhalt (5) ausgegeben wurde.

6. Passiervorrichtung (100) gemäß Anspruch 2, wobei:
der Weg, durch den der Inhalt (5) zum Ausgeben bewegt wird, durch den kanalförmigen Passierabschnitt (172) gebildet wird,
die Licht empfangende Einheit (410), die auf einer Seite des Passierabschnitts (172) angeordnet ist, aus zwei Photodioden zusammengesetzt ist, wobei die zwei Photodioden in einer Linie entlang des Bewegungspfads des Inhalts des Passierabschnitts (172) angeordnet sind,
die Licht emittierende Einheit (420), die auf der anderen Seite des Passierabschnitts (172) angeordnet ist, so dass sie der Licht empfangenden Einheit (410) gegenüberliegt, Licht in Richtung des Passierabschnitts (172) emittiert und die beiden Photodioden das von der Licht emittierenden Einheit (420) emittierte Licht empfangen, und
auf Basis der Menge des Lichts, die von den beiden Photodioden erfasst wurde, bestimmt wird, ob der Inhalt (5) ausgegeben wurde.

7. Passiervorrichtung (100) gemäß einem der Ansprüche 1 bis 6, wobei ein Signal für die Menge des Lichts, die von der Erkennungseinheit erfasst wird, von einer in der Passiervorrichtung (100) enthaltenen Informationsverarbeitungsvorrichtung oder einem gesonderten externen Gerät verarbeitet wird und bestimmt wird, ob der Inhalt ausgegeben wurde.

8. Passiervorrichtung (100) gemäß Anspruch 1, wobei
die erste Licht empfangende Einheit (411) und die zweite Licht empfangende Einheit (412) in einer Linie entlang des Bewegungspfads des Inhalts des Passierabschnitts (172) angeordnet sind.

9. Vorrichtung zur Medikationsverwaltung, umfassend:
die Passiervorrichtung (100) gemäß Anspruch 1,
einen Server zur Medikationsverwaltung (700), und
ein Medikationsanleitungs-Terminal (600),
wobei das Medikationsanleitungs-Terminal (600) eine Ausgabeeinheit (620) umfasst, und
eine Steuereinheit des Medikationsanleitungs-Terminals (630), die konfiguriert ist, Informationen über den Medikationsstatus von der Erkennungseinheit zu empfangen, Informationen über den Medikationsplan von dem Server zur Medikationsverwaltung (700) zu empfangen, Informationen zur Medikationsführung über einen Benutzer unter Verwendung der Informationen über den Medikationsplan und der Informationen über den Medikationsstatus zu erzeugen und anschließend die erzeugten Informationen zur Medikationsführung an die Ausgabeeinheit (620) auszugeben,
wobei die Ausgabeeinheit (620) die Information zur Medikationsführung als Bild oder Audio ausgibt.

10. Verfahren zum Bestimmen mittels einer Informationsverarbeitungsvorrichtung, ob Inhalt (5) ausgegeben wird, basierend auf einer Lichtmenge, die von der Erkennungseinheit der Passiervorrichtung (100) gemäß Anspruch 1 erfasst wurde,
wobei die Erkennungseinheit eine erste Licht empfangende Einheit (411), die an einer stromaufwärtigen Seite eines Pfads, durch den der Inhalt (5) zum Ausgeben bewegt wird, angeordnet ist, eine zweite Licht empfangende Einheit (412), die an einer stromabwärtigen Seite des Pfads angeordnet ist, und eine oder mehrere Licht emittierende Einheit(en) (420), die so angeordnet ist (sind), dass sie der ersten und der zweiten Licht empfangenden Einheit (411, 412) zugewandt ist (sind), umfasst,
wobei das Verfahren Folgendes umfasst:
Erfassen der Menge des Lichts, die außerhalb eines Standardlichtmengenbereichs liegt und kleiner oder gleich einer Referenz-Lichtmenge ist, sowohl durch die erste Licht empfangende Einheit (411) als auch durch die zweite Licht empfangende Einheit (412),
Erfassen der Menge des Lichts, die außerhalb einer ersten Referenz-Lichtmenge bzw. einer zweiten Referenz-Lichtmenge liegt und zu einem Wert innerhalb eines ersten Standardlichtmengenbereichs bzw. eines zweiten Standardlichtmengenbereichs variiert, durch jeweils die erste Licht empfangende Einheit (411) und die zweite Licht empfangende Einheit (412),
Vergleichen eines ersten Zeitpunkts, an dem die von der ersten Licht empfangenden Einheit erfasste Lichtmenge von einem Zustand, in dem sie innerhalb eines ersten Standardlichtmengenbereichs liegt, auf eine erste Referenz-Lichtmenge oder weniger wechselt und anschließend wieder in den ersten Standardlichtmengenbereich eintritt, und eines zweiten Zeitpunkts, an dem die von der zweiten Licht empfangenden Einheit erfasste Lichtmenge von einem Zustand, in dem sie innerhalb eines zweiten Standardlichtmengenbereichs liegt, auf eine zweite Referenz-Lichtmenge oder weniger wechselt und anschließend wieder in den zweiten Standardlichtmengenbereich eintritt, und
wenn der erste Zeitpunkt der gleiche oder ein früherer Zeitpunkt als der zweite Zeitpunkt ist, Bestimmen, dass der Inhalt ausgegeben ist.

11. Verfahren gemäß Anspruch 10, das weiterhin Folgendes umfasst:
Erfassen einer Neigung eines Behälters, in dem die Passiervorrichtung (100) installiert ist, und
wenn die erkannte Neigung des Behälters größer oder gleich 90 Grad ist, Aktivieren der einen oder der mehreren Licht emittierenden Einheiten (420) und der ersten und zweiten Licht empfangenden Einheiten (411, 412).

## Revendications

1. Dispositif de passage (100) configuré pour être couplé à un corps de contenant (117) qui reçoit du contenu (5), le dispositif de passage (100) comprenant :
une unité de fonctionnement de passage (120) configurée pour guider un mouvement de contenu (5) ;
une unité de mouvement de passage (123) qui est montée en rotation dans l'unité de fonctionnement de passage (120) et est déplacée de façon à ce que le contenu (5) passe au travers ; et
une unité de détection qui est prévue dans l'unité de fonctionnement de passage (120) et configurée pour détecter le contenu (5) déchargé par la rotation de l'unité de mouvement de passage (123),
dans lequel l'unité de détection de passage inclut une unité de réception de lumière (410) et une unité d'émission de lumière (420), la lumière émise par l'unité d'émission de lumière (420) passe à travers un chemin, à travers lequel le contenu (5) est déplacé pour être déchargé, et est détectée par l'unité de réception de lumière (410),
**caractérisé en ce que**
l'unité de réception de lumière (410) inclut une première unité de réception de lumière (411) disposée sur un côté amont du chemin à travers lequel le contenu (5) est déplacé pour être déchargé, et une seconde unité de réception de lumière (412) disposée sur un côté aval du chemin ;
et **en ce que** l'unité d'émission de lumière (420) inclut une ou plusieurs unité(s) d'émission de lumière disposées pour être faces à l'unité de réception de lumière (410) ; et
dans lequel un premier point temporel auquel la quantité de la lumière détectée par la première unité de réception de lumière (411) est modifiée d'un état de tomber dans une première plage de quantité de lumière standard à une première quantité de lumière de référence ou moins, puis entre de nouveau dans la première plage de quantité de lumière standard, est comparé à un second point temporel auquel la quantité de la lumière détectée par la seconde unité de réception de lumière (412) est modifiée d'un état de tomber dans une seconde plage de quantité de lumière standard à une seconde quantité de lumière de référence ou moins, puis entre de nouveau dans la seconde plage de quantité de lumière standard ; et
lorsque le premier point temporel est le même que le second point temporel ou plus tôt, il est déterminé que le contenu (5) est déchargé.

2. Dispositif de passage (100) selon la revendication 1, dans lequel :
l'unité de fonctionnement de passage (123) inclut une partie de passage en forme de conduit (172) qui forme un chemin de mouvement pour décharger une quantité fixe de contenu (5), et une partie de guide (180) qui est connectée à la partie de passage (172) pour guider le contenu (5), dans lequel le contenu (5) est déplacé le long de la partie de guide (180), introduit dans la partie de passage (172), puis déchargé vers l'extérieur à travers une ouverture (122) à une extrémité supérieure de la partie de passage (172) ;
l'unité de mouvement de passage (123) inclut un membre d'ouverture (124) qui ouvre ou ferme l'ouverture (122), un arbre de rotation (125) servant de centre d'un mouvement de rotation, et un membre de blocage (127) qui est connecté à l'arbre de rotation (125) et est tourné conjointement avec le membre d'ouverture (124), dans lequel l'unité de mouvement de passage (123) forme une paroi latérale de la partie de passage (172) ; et
l'unité de réception de lumière (410) et l'unité d'émission de lumière (420) sont disposées pour se faire face l'une l'autre sur des parois latérales respectives formées sur des côtés gauche et droit de l'une paroi latérale.

3. Dispositif de passage (100) selon la revendication 1, dans lequel :
lorsque la quantité de la lumière détectée par la première unité de réception de lumière (411) est modifiée d'un état de tomber dans une première plage de quantité de lumière standard à une première quantité de lumière de référence ou moins, puis entre de nouveau dans la première plage de quantité de lumière standard, il est déterminé que le contenu (5) passe à travers la région de la première unité de réception de lumière ;
lorsque la quantité de la lumière détectée par la seconde unité de réception de lumière (412) est modifiée d'un état de tomber dans une seconde plage de quantité de lumière standard à une seconde quantité de lumière de référence ou moins, puis entre de nouveau dans la seconde plage de quantité de lumière standard, il est déterminé que le contenu (5) passe à travers la région de la seconde unité de réception de lumière ;
chacune des première plage de quantité de lumière standard et seconde plage de quantité de lumière standard est une plage de la quantité de la lumière détectée par une correspondante de la première unité de réception de lumière (411) et de la seconde unité de réception de lumière (412) dans un état dans lequel le contenu (5) ne passe pas au travers ; et
lorsqu'il est déterminé que le contenu (5) a passé à travers la région de la première unité de réception de lumière avant la région de la seconde unité de réception de lumière, il est déterminé que le contenu (5) est normalement déchargé.

4. Dispositif de passage (100) selon la revendication 3, dans lequel, lorsqu'il est déterminé que le contenu (5) a passé à travers la région de la seconde unité de réception de lumière avant la région de la première unité de réception de lumière, il est déterminé que le contenu (5) n'est pas déchargé.

5. Dispositif de passage (100) selon la revendication 1, dans lequel :
un premier point temporel auquel la quantité de la lumière détectée par la première unité de réception de lumière (411) atteint un pic descendant, puis atteint une première valeur de référence, est comparé à un second point temporel auquel la quantité de la lumière détectée par la seconde unité de réception de lumière (412) atteint le pic descendant, puis atteint une seconde valeur de référence ; et
lorsque le premier point temporel est le même que le second point temporel ou plus tôt, il est déterminé que le contenu (5) est déchargé.

6. Dispositif de passage (100) selon la revendication 2, dans lequel :
le chemin à travers lequel le contenu (5) est déplacé pour être déchargé est formé par la partie de passage en forme de conduit en (172) ;
l'unité de réception de lumière (410) disposée sur un côté de la partie de passage (172) est composée de deux photodiodes, dans lequel les deux photodiodes sont agencées en une ligne le long du chemin de mouvement du contenu de la partie de passage (172) ;
l'unité d'émission de lumière (420) qui est disposée sur un autre côté de la partie de passage (172) pour être face à l'unité de réception de lumière (410) émet de la lumière vers la partie de passage (172), et les deux photodiodes reçoivent la lumière émise par l'unité d'émission de lumière (420) ; et
il est déterminé si le contenu (5) est déchargé ou non en se basant sur la quantité de la lumière détectée par les deux photodiodes.

7. Dispositif de passage (100) selon l'une quelconque des revendications 1 à 6, dans lequel un signal de la quantité de la lumière qui est détectée par l'unité de détection est traité par un dispositif de traitement d'information inclut dans le dispositif de passage (100) ou un dispositif externe séparé, et si le contenu (5) est déchargé est déterminé.

8. Dispositif de passage (100) selon la revendication 1, dans lequel la première unité de réception de lumière (411) et la seconde unité de réception de lumière (412) sont agencées en une ligne le long du chemin de mouvement du contenu de la partie de passage (172).

9. Dispositif de gestion de médicament comprenant :
le dispositif de passage (100) selon la revendication 1 ;
un serveur de gestion des médicaments (700) ; et
un terminal de guide des médicaments (600),
dans lequel le terminal de guide des médicaments (600) inclut une unité d'émission (620),
et
une unité de commande de terminal de guide des médicaments (630) configurée pour recevoir des informations sur le statut des médicaments de l'unité de détection, recevoir des informations sur l'horaire des médicaments du serveur de gestion des médicaments (700), générer des informations de guidage des médicaments sur un utilisateur en utilisant les informations sur l'horaire des médicaments et les informations sur le statut des médicaments, puis émettre les informations de guidage des médicaments générées vers l'unité d'émission (620),
dans lequel l'unité d'émission (620) émet les informations de guide des médicaments comme une image ou un audio.

10. Procédé de détermination, par un dispositif de traitement des informations, si du contenu (5) est déchargé en se basant sur une quantité de lumière détectée par l'unité de détection du dispositif de passage (100) selon la revendication 1,
dans lequel l'unité de détection inclut une première unité de réception de lumière (411) disposée sur un côté amont d'un chemin à travers lequel le contenu (5) est déplacé pour être déchargé, une seconde unité de réception de lumière (412) disposée sur un côté aval du chemin, et une ou plusieurs unité(s) de lumière (420) disposée(s) pour être faces aux première et seconde unités de réception de lumière (411, 412),
le procédé comprenant :
de détecter, par à la fois la première unité de réception de lumière (411) et la seconde unité de réception de lumière (412), la quantité de la lumière qui est hors d'une plage de quantité de lumière standard et est inférieure ou égale à une quantité de lumière de référence ;
de détecter, par chacune de la première unité de réception de lumière (411) et de la seconde unité de réception de lumière (412), la quantité de la lumière qui est hors d'une première quantité de lumière de référence et d'une seconde quantité de lumière de référence respectivement et varie à une valeur dans une première plage de quantité de lumière standard et une seconde plage de quantité de lumière standard respectivement ;
de comparer un premier point temporel auquel la quantité de la lumière détectée par la première unité de réception de lumière est modifiée d'un état de tomber dans une première plage de quantité de lumière standard à une première quantité de lumière de référence ou moins, puis entre de nouveau dans la première plage de quantité de lumière standard, à un second point temporel auquel la quantité de la lumière détectée par la seconde unité de réception de lumière est modifiée d'un état de tomber dans une seconde plage de quantité de lumière standard à une seconde quantité de lumière de référence ou moins, puis entre de nouveau dans la seconde plage de quantité de lumière standard ; et
lorsque le premier point temporel est le même que le second point temporel ou plus tôt, il est déterminé que le contenu (5) est déchargé.

11. Procédé selon la revendication 10, comprenant en outre :
de détecter une pente d'un contenant dans lequel le dispositif de passage (100) est monté ; et
lorsque la pente détectée du contenant est supérieure ou égale à 90 degrés, d'activer l'une ou les plusieurs unité(s) d'émission de lumière (420) et les première et seconde unités de réception de lumière (411, 412).
